# EUROPÄISCHE PATENTANMELDUNG

(11) **EP 3 358 537 A1**
(43) Veröffentlichungstag der Anmeldung: **08.08.2018**
(21) Anmeldenummer: 18153342.3
(22) Anmeldetag: 25.01.2018
(51) Int. Cl.: G07D 7/2033, G07D 7/202, G07D 7/0047

(54) **Verfahren zum erstellen einer eindeutigen Kennung ausgehend von einem Druckwerk**

(30) Priorität: 02.02.2017 AT 500772017
(71) Anmelder: AIT Austrian Institute of Technology GmbH, 1220 Wien (AT)
(72) Erfinder: WILD, Peter, 1120 Wien (AT); HUBER-MÖRK, Reinhold, 122 Wien (AT); CLABIAN, Markus, 1190 Wien (AT); DAUBNER, Franz, 2440 Gramatneusiedl (AT)
(74) Vertreter: Wildhack & Jellinek

(57) **Zusammenfassung**

Die Erfindung betrifft ein Verfahren zum Erstellen einer eindeutigen Kennung ausgehend von einem Druckwerk. Erfindungsgemäß ist vorgesehen, dass auf dem Druckwerk bei seiner Erstellung geschaffene, wahrnehmbare Strukturen vorhanden sind, deren Lage und Orientierung vom Herstellungsprozess nicht beeinflusst sind, wobei diese Strukturen bei den einzelnen Druckwerken herstellungsbedingt unterschiedlich ausgeprägt sind und für das Druckwerk charakteristisch sind, wobei die wahrnehmbaren Strukturen in Form von in oder auf dem Druckwerk angeordneten Fäden bestehen, wobei ein Abbild des Druckwerks erstellt wird, sodass die Strukturen im Abbild des Druckwerks erfasst werden, und aufgrund der Lage der Strukturen im Abbild des Druckwerks eine Kennung erstellt wird, indem das Abbild der Strukturen bzw. Fäden im Abbild des Druckwerks als Strukturen identifiziert und für die Erstellung der eindeutigen Kennung herangezogen werden.

## Beschreibung

Die Erfindung betrifft ein Verfahren zum Erstellen einer eindeutigen Kennung ausgehend von einem Druckwerk gemäß dem Oberbegriff des Anspruchs 1.

Aus dem Stand der Technik sind Druckwerke wie z. B. Reisepässe bekannt, in deren Seiten Strukturen wie beispielsweise Fäden enthalten sind, die im Rahmen des Herstellungsprozesses nicht vorhersehbar sind und deren Verteilung das betreffende Dokument wie ein Fingerabdruck eindeutig identifiziert.

Aufgabe der vorliegenden Erfindung ist es, diese eindeutige Identifikation zu nutzen und ausgehend von derartigen Dokumenten eine eindeutige digitale Kennung zur Verfügung zu stellen.

Die Erfindung löst diese Aufgabe bei einem Verfahren der eingangs genannten Art mit den kennzeichnenden Merkmalen des Patentanspruchs 1. Ein erfindungsgemäßes Verfahren sieht vor dass, auf dem Druckwerk bei seiner Erstellung geschaffene, wahrnehmbare Strukturen vorhanden sind, deren Lage und Orientierung vom Herstellungsprozess nicht beeinflusst sind, wobei diese Strukturen bei den einzelnen Druckwerken herstellungsbedingt unterschiedlich ausgeprägt sind und für das Druckwerk charakteristisch sind, wobei die wahrnehmbaren Strukturen in Form von in oder auf dem Druckwerk angeordneten Fäden bestehen,
wobei ein Abbild des Druckwerks erstellt wird, sodass die Strukturen im Abbild des Druckwerks erfasst werden, und aufgrund der Lage der Strukturen im Abbild des Druckwerks eine Kennung erstellt wird, indem das Abbild der Strukturen bzw. Fäden im Abbild des Druckwerks als Strukturen identifiziert und für die Erstellung der eindeutigen Kennung herangezogen werden.

Besonders vorteilhafte Formen des erfindungsgemäßen Verfahrens werden durch die Merkmale der abhängigen Ansprüche näher definiert:
Zur Erstellung einer charakteristischen Kennung für ein Druckwerk basierend auf druckwerktypischen Merkmalen, kann vorgesehen sein, dass aus den Abbildern des Druckwerks jeweils die Positionen der Endpunkte der Strukturen bzw. Fäden der Länge 10⁻² m bis 10⁻³ m ermittelt werden, wobei die zugehörigen Endpunkte der einzelnen Fäden einander zugeordnet werden und die Kennung zumindest aufgrund der Position der einander zugeordneten Paare von Endpunkten der Strukturen bzw. Fäden erstellt wird.

Für die Ermittlung einer besonders verwechslungssicheren Kennung für ein Druckwerk kann vorgesehen sein, dass die Kennung zusätzlich aufgrund der folgenden für einzelne der Fäden festgestellten Eigenschaften erstellt wird:
- die Farbe des Fadens, und/oder
- die jeweilige Orientierung des Fadens in den Endpunkten, und/oder
- die Länge des jeweiligen Fadens.

Zur Erreichung einer weiter verbesserten Verwechslungssicherheit einer Kennung für ein Druckwerk kann vorgesehen sein, dass die Kennung aufgrund von statistischen Maßen für die Verteilung der folgenden Eigenschaften der Fäden erstellt wird:
- Position der Fäden auf dem Druckwerk, und/oder
- Orientierung der Fäden, und/oder
- Länge der Fäden, und/oder
- Krümmung der Fäden.

Um ein einfaches Erstellen einer druckwerkspezifischen Kennung zu ermöglichen, kann vorteilhafterweise vorgesehen sein,
- dass die Fäden im Druckwerk bei Bestrahlung mit ultraviolettem Licht im sichtbaren Bereich Licht reflektieren,
- dass das Druckwerk mit ultraviolettem Licht bestrahlt wird, und vom Druckwerk ein Abbild im sichtbaren Bereich erstellt wird.

Eine weitere Verbessung der Verwechslungssicherheit einer eindeutigen Kennung für ein Druckwerk, kann vorgesehen sein, dass eine Anzahl von Bildbereichen vorgegeben wird, wobei für jeden einzelnen Bildbereich jeweils separat unterschiedliche statistische Merkmale der Fäden ermittelt werden und die Kennung aufgrund dieser statistischen Werte erstellt wird.

Um auf besonders einfache Art zu überprüfen, ob zwei Aufnahmen von demselben Druckwerk stammen, kann vorgesehen sein, dass für das Druckwerk bei der ersten Aufnahme eine erste Kennung erfindungsgemäß erstellt wird,
- dass bei der zweiten Aufnahme eine zweite Kennung auf dieselbe Weise wie bei der ersten Aufnahme erstellt wird,
- dass die erste Kennung und die zweite Kennung miteinander verglichen werden, und ein Vergleichsmaß erstellt wird, das die Ähnlichkeit der beiden Kennungen angibt, und
- dass für den Fall, dass
- das Vergleichsmaß eine einen vorgegebenen Schwellenwert übersteigende Übereinstimmung indiziert oder
- dass das Vergleichsmaß eine vollständige Übereinstimmung der Kennungen indiziert,
festgestellt wird, dass bei beiden Aufnahmen dasselbe Druckwerk aufgenommen wurde.

Eine Prüfung, ob zwei Aufnahmen eines Druckwerks dasselbe Druckwerk abbilden, auch wenn die Kanten des Druckwerks und somit auch die Kanten des Abbilds des Druckwerks geometrisch verzerrt zu den Kanten des Bereichs der Aufnahme ausgerichtet sind, wird ermöglicht indem nach einer Abbildungsvorschrift gesucht wird, die die geometrische Transformation vom Abbild des ersten Druckwerks auf das Abbild des zweiten Druckwerks angibt,
wobei für den Vergleich eines der Druckwerke der Transformation unterzogen wird und dann die Anzahl übereinstimmender Paare von Endpunkten in den Abbildern der Druckwerke gebildet wird.

Ein Druckwerk kann auch Schlüssel genutzt werden, der Zugriff auf eine Datenbank gewährt. Für einen sicheren Zugriff auf einen oder mehrere Datensätze innerhalb einer Datenbank kann daher vorgesehen sein, dass bei der Erstellung oder Änderung eines Datensatzes die Kennung des Druckwerks erfindungsgemäß ermittelt wird und der Inhalt des Datensatzes verschlüsselt wird, wobei die Kennung als symmetrischer kryptographischer Schlüssel verwendet wird, und/oder
bei Auslesen eines Datensatzes die Kennung des Druckwerks ermittelt wird und der Inhalt des Datensatzes entschlüsselt wird, wobei die Kennung als symmetrischer kryptographischer Schlüssel verwendet wird.

Eine eindeutige Kennung eines Druckwerks kann auch als Schlüssel für einen Zugriff auf einen oder mehrere Datensätze innerhalb einer Datenbank ermöglichen. Für ein sicheres Abspeichern von Datensätzen in einer Datenbank kann daher vorgesehen sein, dass bei der Erstellung eines Datensatzes die Kennung des Druckwerks erfindungsgemäß ermittelt wird und diese Kennung dem Datensatz als Schlüssel zugeordnet wird,
wobei bei erneutem Zugriff auf die Datenbank die Kennung des Druckwerks erneut ermittelt wird, und als Schlüssel zum Zugriff auf den jeweiligen Datensatz verwendet wird.

Eine besonders sichere Form eines erfindungsgemäßen Verfahrens zum Zugriff auf eine Datenbank mithilfe von zwei eindeutigen Kennungen eines Druckwerks sieht vor, dass bei der Erstellung eines Datensatzes die erste Kennung des Druckwerks ermittelt wird und diese erste Kennung dem Datensatz als Schlüssel zugeordnet wird, wobei der Datensatz gegebenenfalls noch weitere Nutzdaten enthält, und
- wobei bei der Erstellung oder Änderung eines Datensatzes die zweite Kennung des Druckwerks ermittelt wird und der Inhalt des Datensatzes, insbesondere ausschließlich die Nutzdaten, verschlüsselt wird, wobei die zweite Kennung als symmetrischer kryptographischer Schlüssel verwendet wird,
- wobei bei erneutem Zugriff auf die Datenbank die erste Kennung des Druckwerks erneut ermittelt wird, und als Schlüssel zum Zugriff auf den jeweiligen Datensatz verwendet wird, und
- wobei beim Auslesen eines Datensatzes die zweite Kennung des Druckwerks ermittelt wird und der Inhalt des Datensatzes, insbesondere die Nutzdaten, entschlüsselt wird, wobei die zweite Kennung als symmetrischer kryptographischer Schlüssel verwendet wird,
- wobei insbesondere die erste Kennung und die zweite Kennung als Teilmengen einer Kennung des Druckwerks ermittelt werden.

Vorteilhafterweise ist ein Datenträger, auf dem ein Programm zur Durchführung eines Verfahrens nach einem der vorangehenden Ansprüche abgespeichert ist, vorgesehen.

Die Erfindung ist im Folgenden anhand von besonders vorteilhaften, aber nicht einschränkend zu verstehenden Vorgehensweisen in den Zeichnungen schematisch dargestellt und wird unter Bezugnahme auf die Zeichnungen beispielhaft beschrieben:
Eine vorteilhafte Ausführungsform einer erfindungsgemäßen Vorgehensweise wird in Zusammenhang mit **Fig. 1** näher dargestellt. **Fig. 2** zeigt ein mögliches Abbild eines Druckwerks aus der Perspektive des aufnehmenden Bildaufnahmegeräts. **Fig. 3** zeigt ein weiteres mögliches Abbild eines Druckwerks aus der Perspektive des aufnehmenden Bildaufnahmegeräts. **Fig. 4** zeigt die Anwendung einer Abbildungsvorschrift auf ein Abbild eines Druckwerks. **Fig. 5** zeigt eine Unterteilung eines Abbilds eines Druckwerks in zwei Bildbereiche. **Fig. 6** zeigt ein Histogramm einer charakteristischen Eigenschaft der Strukturen auf oder in den Seiten einer Druckwerk. **Fig. 7** zeigt schematisch einen Ablauf eines erfindungsgemäßen Verfahrens zum Zugriff auf eine Datenbank. **Fig. 8** zeigt schematisch einen alternativen Ablauf eines erfindungsgemäßen Verfahrens zum Zugriff auf eine Datenbank.

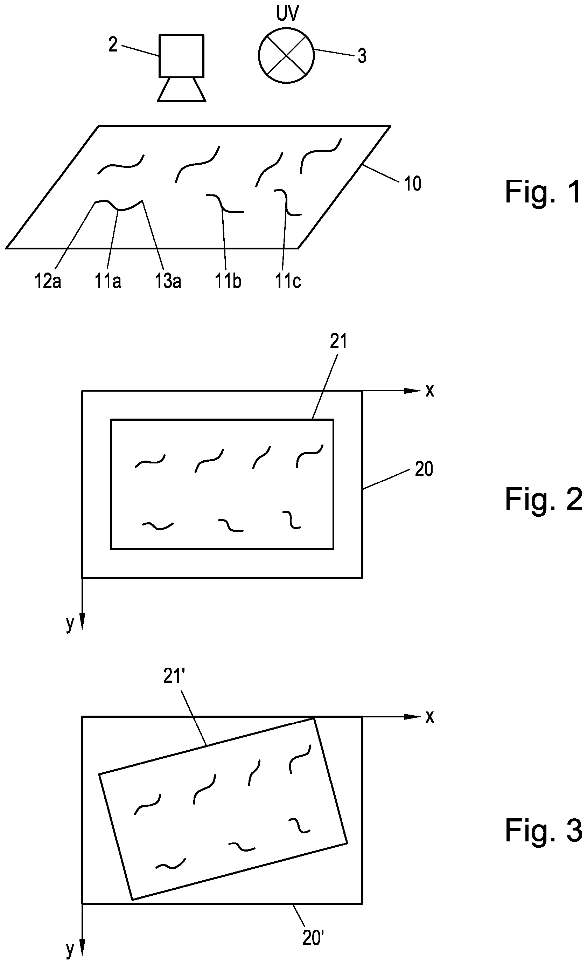

Ein Druckwerk 10 **(****Fig. 1****)** kann bedingt durch seinen Herstellungsprozess durch für das jeweilige Druckwerk 10 spezifische, wahrnehmbare Strukturen 11a, 11b, 11c, wie beispielsweise in oder auf den Seiten des Druckwerks 10 enthaltene Fäden, eindeutig gekennzeichnet sein. Die Lage und Orientierung der Fäden auf den Seiten des Druckwerks 10 sind willkürlich, d.h. nicht durch den Herstellungsprozess vorgegeben. Solche in einem Druckwerk 10 enthaltene Fäden besitzen typischerweise eine Länge von 10⁻² m bis 10⁻³ m. Eine bevorzugte charakteristische Eigenschaft solcher im Druckwerk 10 enthaltenen Strukturen 11a, 11 b, 11 c bzw. Fäden, kann darin bestehen, dass sie bei Bestrahlung mit ultraviolettem Licht im sichtbaren Bereich Licht reflektieren.

Eine Ausführungsform eines erfindungsgemäßen Verfahrens macht sich diese charakteristischen, für ein Druckwerk 10 typischen Strukturen 11a, 11 b, 11 c zunutze, um eine eindeutige Kennung K für das Druckwerk 10 zu erstellen. In Fig. 1 ist eine schematische Darstellung eines Aufbaus eines erfindungsgemäßen Verfahrens gegeben. Um eine solche Kennung zu erstellen, wird das Druckwerk 10 erfindungsgemäß mit einer Quelle für ultraviolettes Licht 3 bestrahlt. Durch diese Bestrahlung reflektieren die im Druckwerk 10 enthaltenen Strukturen 11a, 11 b, 11 c bzw. Fäden Licht im sichtbaren Bereich und mit einem Bildaufnahmegerät 2 wird ein Abbild 21 des Druckwerks 10 erstellt. Dabei werden die charakteristischen Strukturen 11a, 11 b, 11 c im Abbild 21 des Druckwerks erfasst und identifiziert und basierend auf beispielsweise deren Lage im Abbild 21 kann eine eindeutige Kennung K für das Druckwerk 10 erstellt werden. Ein solches Abbild 21 eines Druckwerks 10 ist detaillierter in **Fig. 2** aus der Perspektive des, das Abbild 21 des Druckwerks 10 mit einer Aufnahme 20 aufnehmenden, Bildaufnahmegeräts 2 dargestellt. Dabei ist die Ausrichtung der Kanten des Druckwerks 10 und somit auch der Kanten des Abbilds 21 des Druckwerks 10 parallel zu den Kanten des Bereichs der Aufnahme 20. Im Abbild 21 des Druckwerks 10 können die Abbilder der Strukturen 11a, 11 b, 11 c bzw. Fäden identifiziert werden. Im Abbild der Strukturen 11a, 11 b, 11 c können weitere für ein Druckwerk 10 spezifische Eigenschaft wie beispielsweise die Position der Endpunkte 12a, 13a der Strukturen 11a, 11 b, 11 c auf oder in den Seiten des Druckwerks 10 ermittelt werden. Die Positionen der Endpunkte 12a, 13a der Strukturen 11a, 11 b, 11 c oder Fäden im Abbild des Druckwerks 10 können bevorzugt identifiziert und die beiden Endpunkte 12a, 13a jeweils einer Struktur 11a, 11 b, 11 c zugeordnet werden. So kann eine besonders verwechslungssichere Kennung K für ein Dokument 10 erstellt werden, indem die Kennung K zumindest die einander zugeordneten Paare von Endpunkten enthält.
Weitere Eigenschaften, die im Abbild der Strukturen 11a, 11 b, 11 c ermittelt werden können und für die in einem Druckwerk 10 enthaltenen Strukturen 11a, 11 b, 11 c bzw. Fäden, charakteristisch sind, sind beispielsweise die Länge und Farbe der Strukturen 11a, 11 b, 11 c oder die Orientierung der Endpunkte 12a, 13a der Strukturen 11a, 11 b, 11 c.

Diese Eigenschaften können durch eine Form eines erfindungsgemäßen Verfahrens in einem Abbild des Druckwerks 10 ebenfalls für jede einzelne Struktur 11a, 11 b, 11 c, bzw. jeden einzelnen Faden, ermittelt und in die Kennung K aufgenommen werden.
Eine Variante eines erfindungsgemäßen Verfahrens ermöglicht weiters, statistische Maße für die Verteilung von Eigenschaften wie die Position der Strukturen 11a, 11 b, 11 c auf einem Druckwerk 10 und/oder die Orientierung, Länge, Krümmung oder Farbe der Strukturen 11a, 11 b, 11 c basierend auf einem Abbild des Druckwerks 10 zu bestimmen und in die Kennung K zu integrieren.

Eine bevorzugte Ergänzung eines erfindungsgemäßen Verfahrens ermöglicht anhand dieser verwechslungssicheren Kennung K eines Druckwerks 10 eine Prüfung, ob bei zwei Aufnahmen 20, 20' dasselbe Druckwerk aufgenommen wurde. Werden vom Bildaufnahmegerät 2 mehre Abbilder 21 von Druckwerken 10 erstellt, so ist es mithilfe eines erfindungsgemäßen Verfahrens möglich, für jedes Abbild eine Kennung K zu erstellen, wobei Abbilder 21 desselben Druckwerks 10 basierend auf den charakteristischen Eigenschaften der auf oder in den Seiten des Druckwerks 10 enthaltenen Strukturen 11a, 11b, 11c identische Kennungen K liefern. Für je zwei Abbilder 21 von Druckwerken 10 können Kennungen K erstellt und verglichen werden. Der Vergleich liefert ein Vergleichsmaß, das die Ähnlichkeit der verglichenen Kennungen K angibt.
Werden beispielsweise eine eindeutige Kennung K für ein Druckwerk 10 basierend auf einer ersten Aufnahme 20 zu einem ersten Zeitpunkt und eine eindeutige Kennung K für dasselbe Druckwerk 10 bei einer zweiten Aufnahme 20' zu einem späteren Zeitpunkt ermittelt, miteinander verglichen und ein Vergleichsmaß erstellt, so wird festgestellt, dass das Vergleichsmaß einen vorgegebenen Schwellenwert der Übeinstimmung übersteigt, oder eine vollständige Übereinstimmung der Kennungen K indiziert und dass bei der Aufnahme 20 und der Aufnahme 20' dasselbe Druckwerk 10 aufgenommen wurde.

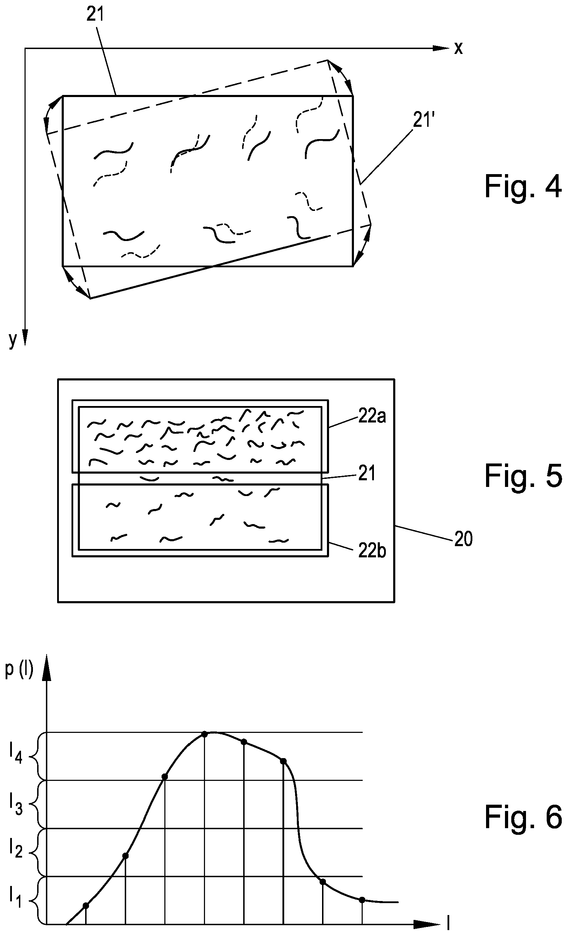

Diese Möglichkeit der Prüfung der Übereinstimmung derartiger Kennungen K besteht nicht nur bei kantenparalleler Ausrichtung der Druckwerke 10. Eine weitere vorteilhafte Variante eines erfindungsgemäßen Verfahrens ermöglicht die Erstellung eines Vergleichsmaßes für die Übereinstimmung von Kennungen K auch für beliebige Lage der Druckwerk 10 im Bereich der Aufnahme 20.
**Fig. 3** zeigt ein weiteres Abbild 21' des Druckwerks 10 aus der Perspektive des, das Abbild 21' mit einer Aufnahme 20' aufnehmenden, Bildaufnahmegeräts 2. Dabei sind die Kanten des Druckwerks 10' und somit auch die Kanten des Abbilds 21' des Druckwerks 10 nicht parallel zu den Kanten des Bereichs der Aufnahme 20' ausgerichtet. Dies kann beispielsweise der Fall sein, wenn Druckwerke 10' in zufälliger Lage am Bildaufnahmegerät 2 aufgenommen werden, sodass keine kantenparallele Ausrichtung des Druckwerks 10' gewährleistet ist.
In diesem Fall kann eine Abbildungsvorschrift für den Vergleich beispielsweise der Anzahl übereinstimmender Paare von Endpunkten 12a, 13a von für ein Druckwerk 10 charakteristischen Strukturen 11a, 11 b, 11 c zwischen den Abbildern 21 und 21' eines Druckwerks 10 genutzt werden. Die Abbildungsvorschrift gibt die geometrische Transformation vom Abbild 21' des ersten auf das Abbild 21 des zweiten Druckwerks 10 an. **Fig. 4** stellt die Anwendung solch einer Abbildungsvorschrift auf ein Abbild 21' dar, bei dem das Abbild 21' um einen Winkel rotiert wird, sodass es mit dem Abbild 21 zur Deckung kommt. Mit derart zur Deckung gebrachten Abbildern 21, 21' ist eine Prüfung der Übereinstimmung der zugehörigen Kennungen K der jeweiligen Druckwerken 10 umfassend die Endpunkte 12a, 13a von charakteristischen Strukturen 11a, 11 b, 11 c nach der zuvor beschriebenen Vorgehensweise besonders einfach möglich.
Eine weitere vorteilhafte Variante eines erfindungsgemäßen Verfahrens sieht die Verwendung einer Abbildungsvorschrift auch für den Vergleich von Kennungen K vor, die beispielsweise die Länge und Farbe der Strukturen 11a, 11 b, 11 c bzw. Fäden oder die Orientierung der Endpunkte 12a, 13a der Strukturen 11 a, 11 b, 11 c umfassen.

Eine weitere Variante eines erfindungsgemäßen Verfahrens bietet die Möglichkeit, dass auf dem im Bereich der Aufnahme 20 aufgenommenen Abbild 21 des Druckwerks 10 eine Anzahl von Bildbereichen 22a, 22b vorgegeben werden kann. In **Fig. 5** ist solch eine Auswahl zweier Bildbereiche 22a und 22b im Abbild 21 beispielhaft skizziert. Für jeden einzelnen Bildbereich 22a, 22b werden mithilfe des erfindungsgemäßen Verfahrens jeweils separate charakteristische statistische Merkmale der Strukturen 11a, 11 b, 11 c bzw. Fäden auf oder in dem Druckwerk 10 nach einer der zuvor beschriebenen Vorgehensweisen separat ermittelt, die in die charakteristische Kennung K des Druckwerks 10 aufgenommen werden oder aus denen die Kennung K des Druckwerks 10 besteht.

In einer vorteilhaften Alternative eines erfindungsgemäßen Verfahrens wird ein Vergleichsmaß für die Ähnlichkeit der verglichenen Kennungen K von Druckwerken 10 basierend auf Histogrammen, d.h. auf graphischen Darstellungen der Häufigkeitsverteilungen, von charakteristischen Eigenschaften wie beispielsweise der Länge und Farbe der Strukturen 11a, 11 b, 11 c bzw. Fäden oder der Orientierung der Endpunkte 12a, 13a der Strukturen 11a, 11 b, 11 c erstellt. Ein derartiges Histogramm, das die Verteilung der Häufigkeit p(I) des Auftretens einer Länge I der auf oder in den Seiten des Druckwerks 10 enthaltenen Strukturen 11a, 11 b, 11 c bzw. Fäden angibt, ist in **Fig. 6** schematisch dargestellt. Zur Erstellung eines derartigen Histogramms kann beispielsweise eine Unterteilung in eine Anzahl von Längenbereichen getroffen werden, die an der x-Achse aufgetragen sind, wobei die Häufigkeit von Strukturen mit einer Länge I, die einem bestimmten Längenbereich entspricht, an der y-Achse des Histogramms abzulesen ist. Ein solches Histogramm einer charakteristischen Eigenschaft der Strukturen 11a, 11 b, 11 c bzw. Fäden auf oder in den Seiten einer Druckwerk 10 ist für die jeweilige Druckwerk 10 für die es erstellt wurde charakteristisch und kann somit für den Vergleich der Abbilder 21 von verschiedenen Druckwerken 10 herangezogen werden.

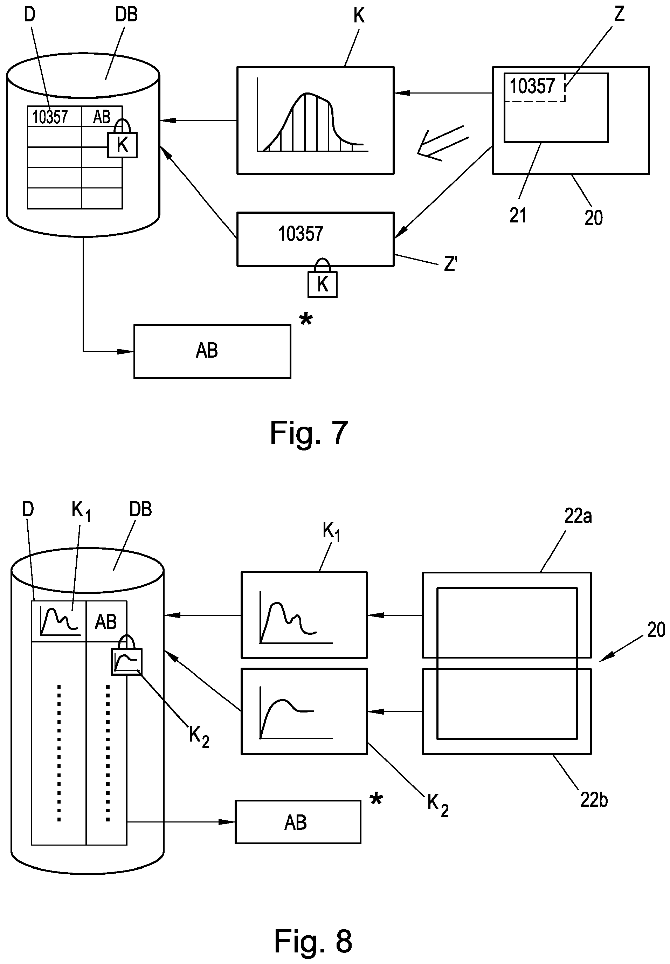

In **Fig. 7** ist der Zugriff auf eine Datenbank DB näher beschrieben, wobei durch das Druckwerk 10 Zugriff auf einen oder mehrere Datensätze D innerhalb der Datenbank DB ermöglicht wird, dargestellt. **Fig. 7** zeigt eine Aufnahme 20 eines Druckwerks 10, für das als erster Schritt des erfindungsgemäßen Verfahrens bei der Erstellung oder Änderung eines Datensatzes D eine eindeutige Kennung K für das Druckwerk 10 erstellt wird und der Inhalt des Datensatzes D verschlüsselt wird. Die erstellte Kennung K dient dabei als symmetrischer kryptographischer Schlüssel. Das bedeutet, dass im im **Fig. 8** beschriebenen Fall die eindeutige Kennung K des Druckwerks 10, als Schlüssel zur Ver- und Entschlüsselung des Datensatzes D verwendet wird, d.h., dass es für die Verschlüsselung bzw. Entschlüsselung erforderlich ist, über ein Abbild 21 des betreffenden Druckwerks zu verfügen. Vorteile eines derartigen Verschlüsselungsverfahrens sind seine hohe Geschwindigkeit und hohe Sicherheit bei Verwendung entsprechend langer Schlüssel.
Die eindeutige Kennung K des Druckwerks 10 beinhaltet im Beispiel ein Histogramm einer charakteristischen Eigenschaft wie beispielsweise der Längenverteilung p(I) der Fäden. Das Histogramm wird basierend auf dem Abbild der für das Druckwerk 10 charakteristischen Strukturen 11a, 11 b, 11 c bzw. Fäden auf dem Abbild 21 erstellt. Die dem Druckwerk 10 und somit auch dem Abbild 21 des Druckwerks 10 zugeordnete Information Z, die Zugriff auf eine Datenbank DB gewährt, ist im Beispiel als 5-stellige Zahlenkombination angegeben. Sowohl die eindeutige Kennung K des Druckwerks 10, als auch die dem Druckwerk 10 zugeordnete Information Z, die Zugriff auf die Datenbank DB gewährt, werden in verschlüsselter Form Z' an die Datenbank DB übermittelt. Dadurch wird der Zugriff auf die in der Datenbank DB enthaltene Datensätze D gewährt. Alternativ oder auch zusätzlich kann beim Auslesen eines Datensatzes D die Kennung K eines Druckwerks 10 ermittelt und der Inhalt des Datensatzes D verschlüsselt werden, wobei die Kennung K des Druckwerks 10 ebenfalls wieder als symmetrischer kryptographischer Schlüssel verwendet wird.

Alternativ ist auch ein Verfahren zum Abspeichern von Datensätzen D in einer Datenbank DB vorgesehen, wobei mit dem Druckwerk 10 Zugriff auf einen oder mehrere Datensätze D innerhalb der Datenbank DB ermöglicht wird. Diese Variante eines erfindungsgemäßen Verfahrens sieht vor, dass für das Druckwerk 10 bei der Erstellung eines Datensatzes D eine eindeutige Kennung K nach einem voranstehend beschriebenen Verfahren, basierend auf den charakteristischen Eigenschaften des Abbilds der Strukturen 11a, 11b, 11c bzw. Fäden auf dem Abbild 21 des Druckwerks 10, erstellt wird und die Kennung K des Druckwerks 10 dem Datensatz D als Schlüssel zugeordnet wird. Bei einem erneuten Zugriff auf die Datenbank DB wird die Kennung K des Druckwerks 10 erneut ermittelt und als Schlüssel zum Zugriff auf die in der Datenbank DB enthaltenen Datensätze D verwendet.
Ein möglicher Anwendungsfall für ein derartiges Verfahren ist beispielsweise die Reisepasskontrolle an z. B. einem Grenzübergang oder einem Flughafen. Ein zu überprüfendes Druckwerk 10, kann in diesem Fall eine Reisepass sein. Die zugeordnete Information Z, die Zugriff auf eine Datenbank DB gewährt, kann beispielsweise die Reisepassnummer sein. Die in der Datenbank DB enthaltenen Nutzdaten AB können sensible personenbezogene Daten wie Name, Geburtsdatum, Geburtsort oder Wohnort des Inhabers Druckwerks 10 bzw. des Reisepasses umfassen. Die für das Druckwerk 10 bzw. den Reisepass eindeutige Kennung K dient dabei als symmetrischer kryptographischer Schlüssel für die in der Datenbank DB enthaltenen Datensätze D, die beispielsweise bei der Ausstellung des Reisepasses in der Datenbank DB hinterlegt werden können. Bei der Reisepasskontrolle wird ein Abbild 21 des Reisepasses 10 erstellt. Eine eindeutige Kennung K kann bei der Kontrolle mithilfe der Abbilder der Fäden auf dem Abbild 21 des Druckwerks 10 bzw. des Reisepasses erstellt werden. Diese Kennung K wird als Schlüssel für die Verschlüsselung der Reisepassnummer Z verwendet und die so verschlüsselte Reisepassnummer Z' wird gemeinsam mit der Kennung K an die Datenbank DB übermittelt. Die Reisepassnummer gewährt den Zugang zur Datenbank DB. Mit der Kennung K können die in der Datenbank DB enthaltenen verschlüsselten Datensätze D entschlüsselt werden und die Klartext-Informationen können ausgelesen werden.

In **Fig. 8** ist ein alternativer Ablauf eines erfindungsgemäßen Verfahrens zum Zugriff auf eine Datenbank DB schematisch dargestellt. Als erster Schritt wird nach einem der voranstehend beschriebenen erfindungsgemäßen Verfahren für ein Druckwerk 10 mehrere eindeutige Kennungen K₁, K₂ basierend auf einem Abbild 21 des Druckwerks 10 ermittelt. Dazu wird die Aufnahme 20 in Bildbereiche 22a und 22b unterteilt und für jeden Bildbereich 22a, 22b je eine eindeutige Kennung K₁, K₂ des Druckwerks 10 ermittelt, basierend auf den charakteristischen Eigenschaften von Strukturen 11a, 11 b, 11 c bzw. Fäden in den Bildbereichen 22a und 22b. Die erste Kennung K₁ des Druckwerks 10, beispielsweise für den Bildbereich 22a, wird bei der Erstellung eines Datensatzes D ermittelt, wobei diese erste Kennung K₁ dem Datensatz D als Schlüssel zugeordnet wird. Diese erste Kennung K₁ des Druckwerks 10 dient somit als Schlüssel für den Zugriff auf die Datenbank DB.
Eine zweite Kennung K₂ des Druckwerks 10, beispielsweise für den Bildbereich 22b, wird bei Erstellung oder Änderung eines Datensatzes D ermittelt und der Datensatz D verschlüsselt, wobei die zweite Kennung K₂ als symmetrischer kryptographischer Schlüssel verwendet wird, sodass die in der Datenbank DB enthaltenen Informationen ausgelesen werden können. Das bedeutet im beschriebenen Fall, dass die zweite Kennung K₂ des Druckwerks 10 als Schlüssel zur Ver- und Entschlüsselung des Datensatzes D verwendet wird.
Die Kennungen K₁, K₂ des Druckwerks 10 sind im in **Fig. 8** gezeigten Beispiel als Histogramme charakteristischer Eigenschaften, die basierend auf Abbildern der charakteristischen Strukturen 11a, 11 b, 11 c bzw. Fäden in den Bildbereichen 22a und 22b auf dem Abbild 21 des Druckwerks 10 erstellt werden, dargestellt.
Bei erneutem Zugriff auf die Datenbank DB wird die erste Kennung K₁ des Druckwerks 10 erneut ermittelt und als Schlüssel zum Zugriff auf den jeweiligen Datensatz D in der Datenbank DB verwendet. Die zweite Kennung K₂ des Druckwerks 10 wird beim Auslesen eines Datensatzes D aus der Datenbank DB ermittelt und der Inhalt des Datensatzes D wird entschlüsselt, wobei die zweite Kennung K₂ wieder als symmetrischer kryptographischer Schlüssel verwendet wird.

## Patentansprüche

1. Verfahren zum Erstellen einer eindeutigen Kennung (K) ausgehend von einem Druckwerk (10),
- wobei auf dem Druckwerk (10) bei seiner Erstellung geschaffene, wahrnehmbare Strukturen (11a, 11b, 11c) vorhanden sind, deren Lage und Orientierung vom Herstellungsprozess nicht beeinflusst sind, wobei diese Strukturen (11a, 11b, 11c) bei den einzelnen Druckwerken herstellungsbedingt unterschiedlich ausgeprägt sind und für das Druckwerk (10) charakteristisch sind, wobei die wahrnehmbaren Strukturen (11a, 11b, 11c) in Form von in oder auf dem Druckwerk (10) angeordneten Fäden bestehen
- wobei ein Abbild (21) des Druckwerks (10) erstellt wird, sodass die Strukturen (11a, 11b, 11c) im Abbild (21) des Druckwerks (10) erfasst werden, und aufgrund der Lage der Strukturen (11a, 11b, 11c) im Abbild (21) des Druckwerks (10) eine Kennung (K) erstellt wird, indem das Abbild der Strukturen (11a, 11 b, 11 c) bzw. Fäden im Abbild (21) des Druckwerks (10) als Strukturen identifiziert und für die Erstellung der eindeutigen Kennung (K) herangezogen werden.

2. Verfahren nach Anspruch 1, **dadurch gekennzeichnet, dass** aus den Abbildern (21) des Druckwerks (10) jeweils die Positionen der Endpunkte (12a, 13a) der Strukturen (11a, 11b, 11c) bzw. Fäden der Länge 10⁻² m bis 10⁻³ m ermittelt werden, wobei die zugehörigen Endpunkte (12a, 13a) der einzelnen Fäden einander zugeordnet werden und die Kennung (K) zumindest aufgrund der Position der einander zugeordneten Paare von Endpunkten (12a, 13a) der Strukturen (11 a, 11 b, 11 c) bzw. Fäden erstellt wird.

3. Verfahren nach Anspruch 2, **dadurch gekennzeichnet, dass** die Kennung (K) zusätzlich aufgrund der folgenden für einzelne der Fäden festgestellten Eigenschaften erstellt wird:
- die Farbe des Fadens, und/oder
- die jeweilige Orientierung des Fadens in den Endpunkten (12a, 13a), und/oder
- die Länge des jeweiligen Fadens.

4. Verfahren nach einem der vorangehenden Ansprüche, **dadurch gekennzeichnet, dass** die Kennung (K) aufgrund von statistischen Maßen für die Verteilung der folgenden Eigenschaften der Fäden erstellt wird:
- Position der Fäden auf dem Druckwerk (10), und/oder
- Orientierung der Fäden, und/oder
- Länge der Fäden, und/oder
- Krümmung der Fäden.

5. Verfahren nach einem der vorangehenden Ansprüche, **dadurch gekennzeichnet,**
- **dass** die Fäden im Druckwerk (10) bei Bestrahlung mit ultraviolettem Licht (3) im sichtbaren Bereich Licht reflektieren,
- **dass** das Druckwerk (10) mit ultraviolettem Licht (3) bestrahlt wird, und vom Druckwerk (10) ein Abbild (21) im sichtbaren Bereich erstellt wird.

6. Verfahren nach einem der vorangehenden Ansprüche, **dadurch gekennzeichnet, dass** eine Anzahl von Bildbereichen (22a, 22b) vorgegeben wird, wobei für jeden einzelnen Bildbereich (22a, 22b) jeweils separat unterschiedliche statistische Merkmale der Fäden ermittelt werden und die Kennung (K) aufgrund dieser statistischen Werte erstellt wird.

7. Verfahren zur Prüfung, ob bei zwei Aufnahmen (20, 20') dasselbe Druckwerk (10) aufgenommen wird, wobei
- für das Druckwerk (10) bei der ersten Aufnahme (20) eine erste Kennung (K) nach einem der Ansprüche 1 bis 6 erstellt wird,
- dass bei der zweiten Aufnahme (20') eine zweite Kennung (K₂) auf dieselbe Weise wie bei der ersten Aufnahme (20) erstellt wird,
- dass die erste Kennung (K₁) und die zweite Kennung (K₂) miteinander verglichen werden, und ein Vergleichsmaß erstellt wird, das die Ähnlichkeit der beiden Kennungen (K₁, K₂) angibt, und
- dass für den Fall, dass
- das Vergleichsmaß eine einen vorgegebenen Schwellenwert übersteigende Übereinstimmung indiziert oder
- dass das Vergleichsmaß eine vollständige Übereinstimmung der Kennungen (K₁, K₂) indiziert,
festgestellt wird, dass bei beiden Aufnahmen (20, 20') dasselbe Druckwerk (10) aufgenommen wurde.

8. Verfahren zur Prüfung nach Anspruch 7, unter Verwendung einer nach Anspruch 3 oder 4 erstellten Kennung (K),
- wobei nach einer Abbildungsvorschrift gesucht wird, die die geometrische Transformation vom Abbild (21) des ersten Druckwerks (10) auf das Abbild (21') des zweiten Druckwerks (10') angibt,
- wobei für den Vergleich eines der Druckwerke (10) der Transformation unterzogen wird und dann die Anzahl übereinstimmender Paare von Endpunkten (12a, 13a) in den Abbildern (21, 21') der Druckwerke (10, 10') gebildet wird.

9. Verfahren zum Zugriff auf eine Datenbank (DB), wobei mit dem Druckwerk (10) Zugriff auf einen oder mehrere Datensätze (D) innerhalb der Datenbank (DB) ermöglicht wird,
- wobei bei der Erstellung oder Änderung eines Datensatzes (D) die Kennung (K) des Druckwerks (10) nach einem der Ansprüche 1 bis 6 ermittelt wird und der Inhalt des Datensatzes (D) verschlüsselt wird, wobei die Kennung (K) als symmetrischer kryptographischer Schlüssel verwendet wird, und/oder
- bei Auslesen eines Datensatzes (D) die Kennung (K) des Druckwerks (10) ermittelt wird und der Inhalt des Datensatzes (D) entschlüsselt wird, wobei die Kennung (K) als symmetrischer kryptographischer Schlüssel verwendet wird.

10. Verfahren zur Abspeicherung von Daten in einer Datenbank (DB), wobei mit dem Druckwerk (10) Zugriff auf einen oder mehrere Datensätze (D) innerhalb der Datenbank (DB) ermöglicht wird,
- wobei bei der Erstellung eines Datensatzes (D) die Kennung (K) des Druckwerks (10) nach einem der Ansprüche 1 bis 6 ermittelt wird und diese Kennung (K) dem Datensatz als Schlüssel zugeordnet wird, und
- wobei bei erneutem Zugriff auf die Datenbank die Kennung (K) des Druckwerks (10) erneut ermittelt wird, und als Schlüssel zum Zugriff auf den jeweiligen Datensatz (D) verwendet wird.

11. Verfahren zum Zugriff auf eine Datenbank (DB), wobei aus dem Druckwerk (10) zwei Kennungen (K₁, K₂) jeweils nach einem der vorangehenden Ansprüche ermittelt werden,
- wobei bei der Erstellung eines Datensatzes (D) die erste Kennung (K₁) des Druckwerks (10) ermittelt wird und diese erste Kennung (K₁) dem Datensatz (D) als Schlüssel zugeordnet wird, wobei der Datensatz gegebenenfalls noch weitere Nutzdaten (AB) enthält, und
- wobei bei der Erstellung oder Änderung eines Datensatzes (D) die zweite Kennung (K₂) des Druckwerks (10) ermittelt wird und der Inhalt des Datensatzes (D), insbesondere ausschließlich die Nutzdaten (AB), verschlüsselt wird, wobei die zweite Kennung (K₂) als symmetrischer kryptographischer Schlüssel verwendet wird,
- wobei bei erneutem Zugriff auf die Datenbank die erste Kennung (K₁) des Druckwerks (10) erneut ermittelt wird, und als Schlüssel zum Zugriff auf den jeweiligen Datensatz (D) verwendet wird, und
- wobei beim Auslesen eines Datensatzes (D) die zweite Kennung (K₂) des Druckwerks (10) ermittelt wird und der Inhalt des Datensatzes (D), insbesondere die Nutzdaten (AB), entschlüsselt wird, wobei die zweite Kennung (K₂) als symmetrischer kryptographischer Schlüssel verwendet wird,
- wobei insbesondere die erste Kennung (K₁) und die zweite Kennung (K₂) als Teilmengen einer Kennung (K) des Druckwerks (10) ermittelt werden.

12. Datenträger, auf dem ein Programm zur Durchführung eines Verfahrens nach einem der vorangehenden Ansprüche abgespeichert ist.
